# EUROPÄISCHE PATENTSCHRIFT

(11) **EP 2 392 847 B1**
(45) Veröffentlichungstag und Bekanntmachung des Hinweises auf die Patenterteilung: **12.03.2014**
(21) Anmeldenummer: 11002308.2
(22) Anmeldetag: 21.03.2011
(51) Int. Cl.: F16L 37/098, F16L 37/138, F16L 37/133

(54) **Schnellkupplung für Fluidleitungen**
Quick coupling for fluid conduits
Raccord rapide pour conduites de fluide

(30) Priorität: 01.06.2010 DE 102010022304
(43) Veröffentlichungstag der Anmeldung: 07.12.2011
(73) Patentinhaber: VERITAS AG, 63571 Gelnhausen (DE)
(72) Erfinder: Pernikl, Norbert, 36381 Schlüchtern (DE)
(74) Vertreter: Grünecker, Kinkeldey, Stockmair & Schwanhäusser

(56) Entgegenhaltungen:
- CA-A1- 2 554 879
- DE-U1-202005 016 966
- DE-U1-202006 018 697

## Beschreibung

Die Erfindung betrifft eine Verbindungsanordnung mit einer Schnellkupplung für Fluidleitungen und einem Verbindungsgegenstück mit einer Aufnahmeöffnung, umfassend: einen Stutzen, welcher dichtend in eine Aufnahmeöffnung eines Gegenstücks einsteckbar ist und über eine Rasteinrichtung mit dem Gegenstück in Rasteingriff bringbar ist; wobei die Schnellkupplung wenigstens eine Stützeinrichtung aufweist, um den Stutzen kippsicher am Gegenstück abzustützen.

Eine derartige Schnellkupplung ist aus der DE 20 2005 015 966 U1 bzw. WO 2007/042344 A1 bekannt. Bei dieser Lösung weist der Stutzen radial vorspringende Stützflächen zur kippsicheren Abstützung in der Aufnahmeöffnung auf. Nach dieser Lösung ist der Stutzen im Zustand des Rasteingriffs mit dem Gegenstück zwangsläufig kippfrei am Gegenstück festgelegt. Um Anschlussleitungen auch im Zustand des Rasteingriffs mit der Schnellkupplung verbinden oder davon lösen zu können, ist jedoch eine gewisse Bewegungsfreiheit der Schnellkupplung wünschenswert.

Der Erfindung liegt die Aufgabe zugrunde, eine Verbindungsanordnung der eingangs genannten Art derart zu verbessern, um auch im Zustand des Rasteingriffs eine gewisse Bewegungsfreiheit der Verbindungsanordnung zu ermöglichen.

Die Aufgabe der Erfindung wird gelöst durch eine Verbindungsanordnung mit einer Schnellkupplung für Fluidleitungen und einem Verbindungsgegenstück umfassend: einen Stutzen, welcher dichtend in eine Aufnahmeöffnung eines Gegenstücks einsteckbar ist und über eine Rasteinrichtung mit dem Gegenstück in Rasteingriff bringbar ist; wobei die Schnellkupplung wenigstens eine Stützeinrichtung aufweist, um den Stutzen kippsicher am Gegenstück abzustützen, wobei die Stützeinrichtung gegenüber dem Stutzen bewegbar ist, und, wenn sich die Rasteinrichtung mit dem Gegenstück in Rasteingriff befindet, zwischen einer Gebrauchsstellung, in welcher die Stützeinrichtung den Stutzen kippsicher am Gegenstück abstützt, und einer Nicht-Gebrauchsstellung, in welcher der Stutzen gegenüber dem Gegenstück kippbar ist, überführbar ist, und in der Gebrauchsstellung einen Abstand zwischen dem Stutzen und dem Gegenstück in radialer Richtung, vorzugsweise auf diametral gegenüberliegenden Seiten des Stutzens lückenlos überbrückt.

Über die Rasteinrichtung kann die Schnellkupplung am Gegenstück vormontiert werden. Dabei wird die Stützeinrichtung vorzugsweise in einer Nicht-Gebrauchs-stellung gehalten, in welcher der Stutzen gegenüber dem Gegenstück bewegbar und insbesondere kippbar ist. Dadurch können Anschlussleitungen besser und leichter mit der Schnellkupplung verbunden oder davon gelöst werden als bei der bekannten Lösung. Erst wenn die Anschlussleitungen bestimmungsgemäß montiert oder demontiert sind, wird die Stützeinrichtung vorzugsweise in eine Gebrauchsstellung überführt werden, in welcher die Stützeinrichtung den Stutzen kippsicher am Gegenstück abstützt.

Die Rasteinrichtung der erfindungsgemäßen Verbindungsanordnung erfüllt vorzugsweise zumindest eine der folgenden Anforderungen:
- Die Rasteinrichtung umfasst wenigstens einen vom Stutzen abragenden Rastarm, der sich im Wesentlichen parallel zur Achse des Stutzens entgegen der Einsteckrichtung erstreckt und in radialer Richtung federelastisch ausgebildet ist.
- Die Rasteinrichtung umfasst vorzugsweise zwei identische Rastarme, die auf zwei einander diametral gegenüberliegenden Seiten des Stutzens angeordnet sind.
- Die Rasteinrichtung, vorzugsweise jeder Rastarm, umfasst wenigstens eine in und wenigstens eine entgegen der Einsteckrichtung vom Stutzen abweisende Keilfläche, wobei die in Einsteckrichtung vom Stutzen abweisende Keilfläche einen kleineren Winkel zur Achse des Stutzens einschließt als die entgegen der Einsteckrichtung vom Stutzen abweisende Keilfläche, so dass die erforderliche Kraft, um die Rasteinrichtung mit dem Gegenstück in Rasteingriff zu bringen, kleiner ist als die erforderliche Kraft, um den Rasteingriff zu lösen. Der Begriff Keilfläche umfasst jede Fläche die gegenüber der Achse des Stutzens geneigt ist. Vorzugsweise ist eine Keilfläche als Kegelmantelabschnitt ausgebildet und/oder konvex gewölbt.
- Die Rasteinrichtung ist vollständig innerhalb der Aufnahmeöffnung anordenbar.

Eine derartige Rasteinrichtung erweist sich als besonders montagefreundlich. Dadurch, dass die Rasteinrichtung vollständig innerhalb der Aufnahmeöffnung anordenbar ist, kann ein unbeabsichtigtes Lösen der Rasteinrichtung weitgehend ausgeschlossen werden. Überdies kann die Aufnahmeöffnung leichter verschlossen und/oder abgedichtet werden, um ein Eindringen von Schmutz in die Aufnahmeöffnung zu verhindern.

Es kann sich als vorteilhaft erweisen, wenn die Stützeinrichtung entlang der Achse des Stutzens beweglich, vorzugsweise verdrehsicher, am Stutzen gehalten ist. In einer alternativen Ausführung wird die Stützeinrichtung verdrehbar und verschiebesicher am Stutzen gehalten. Dadurch wird eine Fehlbedienung der Stützeinrichtung im Wesentlichen ausgeschlossen.

Es kann sich als hilfreich erweisen, wenn die Stützeinrichtung unverlierbar, vorzugsweise unlösbar, mit dem Stutzen verbunden ist. Dabei kann die Stützeinrichtung den Stutzen in Umfangsrichtung zumindest abschnittsweise, vorzugweise vollständig, umgeben. Die Stützeinrichtung kann aber auch schalenförmige Teile umfassen, die um den Stutzen zu einer ringförmigen Anordnung verbindbar oder verbunden sind. Beispielsweise ist die Stützeinrichtung im Querschnitt im Wesentlichen U-förmig ausgebildet und rastend auf den Stutzen aufsetzbar. Dadurch kann die Gefahr, dass sich die Stützeinrichtung unbeabsichtigt von der Schnellkupplung löst, verringert werden.

Es kann aber auch vorteilhaft sein, wenn die Stützeinrichtung in wenigstens einer Stellung gegenüber dem Stutzen und/oder dem Gegenstück arretierbar, vorzugsweise kraftschlüssig und/oder formschlüssig verrastbar ist. So kann verhindert werden, dass die Stützeinrichtung unbeabsichtigt in eine andere Stellung überführt wird.

Es sich als besonders nützlich erweisen, wenn die Stützeinrichtung derart ausgebildet ist, um die Aufnahmeöffnung vorzugsweise dichtend zu verschließen. Bevorzugt ist die Aufnahmeöffnung dichtend durch die Stützeinrichtung verschlossen, wenn die Stützeinrichtung den Stutzen kippsicher am Gegenstück abstützt. Dadurch kann verhindert werden, dass Schmutz in die Aufnahmeöffnung gelangt und bspw. die Rastarme der Rasteinrichtung blockiert. Vorzugsweise ist die Stützeinrichtung im Wesentlichen deckelförmig ausgebildet und umfasst eine umlaufende Dichtung, die mit dem Gegenstück dichtend in Anlage bringbar ist.

In einer vorteilhaften Ausführung der Erfindung weist die Stützeinrichtung zumindest einen Stützabschnitt auf, der wenigstens eine der folgenden Anforderungen erfüllt:
- Der Stützabschnitt ist als Federzunge ausgebildet.
- Der Stützabschnitt in radialer Richtung zur Achse des Stutzens federelastisch ausgebildet.
- Der Stützabschnitt ist mit dem Stutzen und/oder dem Gegenstück kraftschlüssig und/oder formschlüssig in Eingriff bringbar, vorzugsweise verrastbar.
- Der Stützabschnitt erstreckt sich im Wesentlichen parallel zur Achse des Stutzens, vorzugsweise in Einsteckrichtung.
- Der Stützabschnitt umfasst eine dem Stutzen zugewandte Gleitfläche, die vorzugsweise gleitend auf dem Stutzen geführt wird und bevorzugt eine der Außenkontur des Stutzens angepasste Innenkontur aufweist.
- Der Stützabschnitt umfasst eine vom Stutzen abweisende Stützfläche, die vorzugsweise als Zylindermantelabschnitt ausgebildet ist und eine der Innenkontur der Aufnahmeöffnung angepasste Außenkontur aufweist.
- Der Stützabschnitt umfasst eine in Einsteckrichtung vom Stutzen abweisende Keilfläche, die vorzugsweise einen spitzen Winkel zur Achse des Stutzens einschließt und bevorzugt als Kegelmantelabschnitt ausgebildet ist.
- Der Stützabschnitt umfasst ein Rastmittel, das mit dem Gegenstück in Rasteingriff bringbar ist, vorzugsweise einen radial über die Stützfläche vorstehenden Rastvorsprung, wobei das Rastmittel bevorzugt wenigstens eine in und wenigstens eine entgegen der Einsteckrichtung vom Stutzen abweisende Keilfläche umfasst, wobei die in Einsteckrichtung vom Stutzen abweisende Keilfläche einen kleineren Winkel zur Achse des Stutzens einschließt als die entgegen der Einsteckrichtung vom Stutzen abweisende Keilfläche, so dass die erforderliche Kraft, um das Rastmittel mit dem Gegenstück in Rasteingriff zu bringen, kleiner ist als die erforderliche Kraft, um den Rasteingriff zu lösen.
- Der Stützabschnitt umfasst einen über die Stützfläche radial vorstehenden Anschlag, der die Einstecktiefe des Stützabschnitts in der Aufnahmeöffnung des Gegenstücks beschränkt.

In einer besonders vorteilhaften Ausführung der Erfindung weist die Stützeinrichtung wenigstens zwei Stützabschnitte auf, die zumindest eine der folgenden Anforderungen erfüllen:
- Die Stützabschnitte sind in regelmäßigen Abständen zueinander um den Umfang des Stutzens angeordnet.
- Die Stützabschnitte sind rotationssymmetrisch um die Achse des Stutzens angeordnet.
- Die Stützabschnitte sind auf zwei einander diametral gegenüberliegenden Seiten des Stutzens angeordnet.
- Die Stützabschnitte sind zwischen den Rastarmen angeordnet.
- Die Stützabschnitte sind identisch ausgebildet.

In einer bevorzugten Ausführung der Erfindung weist die Verbindungsanordnung eine Sicherungseinrichtung auf, die zwischen einer Sicherungsstellung, in welcher der Rasteingriff der Rasteinrichtung mit dem Gegenstück gegen Lösen gesichert ist, und einer Lösestellung, in welcher der Rasteingriff lösbar ist, überführbar ist. Die Sicherungseinrichtung erfüllt vorzugsweise zumindest eine der folgenden Anforderungen:
- In der Sicherungsstellung blockiert die Sicherungseinrichtung eine Lösebewegung der Rasteinrichtung, vorzugsweise eine radial nach innen gerichtete Lösebewegung eines Rastarms der Rasteinrichtung.
- In der Lösestellung gibt die Sicherungseinrichtung eine Lösebewegung der Rasteinrichtung, vorzugsweise eine radial nach innen gerichtete Lösebewegung eines Rastarms der Rasteinrichtung, frei.
- Die Sicherungseinrichtung ist in axialer Richtung beweglich am Stutzen gehalten.
- Die Sicherungseinrichtung ist verdrehsicher am Stutzen gehalten.
- Die Sicherungseinrichtung ist in wenigstens einer Stellung gegenüber dem Stutzen und/oder dem Gegenstück arretierbar, vorzugsweise kraftschlüssig und/oder formschlüssig verrastbar.
- Die Sicherungseinrichtung ist in der Sicherungsstellung und/oder in der Lösestellung am Stutzen und/oder am Gegenstück arretiert, vorzugsweise kraftschlüssig und/oder formschlüssig verrastet.
- Die Sicherungseinrichtung ist entlang des Stutzens verschieblich angeordnet.
- Die Sicherungseinrichtung ist unverlierbar mit der Schnellkupplung, vorzugsweise unverlierbar mit dem Stutzen, verbunden.
- Die Sicherungseinrichtung ist unlösbar mit der Schnellkupplung, vorzugsweise unlösbar mit dem Stutzen, verbunden.
- Die Sicherungseinrichtung umgibt den Stutzen in Umfangsrichtung zumindest abschnittsweise, vorzugweise vollständig.
- Die Sicherungseinrichtung besteht aus im Wesentlichen schalenförmigen Teilen, die um den Stutzen zu einer ringförmigen Anordnung verbunden sind.
- Die Sicherungseinrichtung ist im Querschnitt im Wesentlichen U-förmig ausgebildet und rastend auf den Stutzen aufsetzbar.
- Die Sicherungseinrichtung ist gemeinsam mit der Stützeinrichtung gegenüber dem Stutzen bewegbar.

Es kann von Vorteil sein, wenn die die Stützeinrichtung gemeinsam mit der Sicherungseinrichtung gegenüber dem Stutzen bewegbar ist, wobei die Stützeinrichtung den Stutzen vorzugsweise kippsicher am Gegenstück abstützt, wenn sich die Sicherungseinrichtung in der Sicherungsstellung befindet.

Es kann vorteilhaft sein, wenn die Stützeinrichtung vorzugsweise fest, bevorzugt einstückig, mit der Sicherungseinrichtung verbunden ist, oder einteilig mit der Sicherungseinrichtung ausgebildet ist. Bevorzugt bilden die Sicherungseinrichtung und die Stützeinrichtung gemeinsam einen gegenüber dem Stutzen beweglichen Schieber. Dadurch kann die Betätigung der Sicherungseinrichtung und der Stützeinrichtung erheblich vereinfacht werden.

Es kann von Vorteil sein, dass die Stützeinrichtung, wenn sich die Rasteinrichtung mit dem Gegenstück in Rasteingriff befindet, zwischen einer Gebrauchsstellung, in welcher die Stützeinrichtung den Stutzen kippsicher am Gegenstück abstützt, und einer Nicht-Gebrauchsstellung, in welcher der Stutzen gegenüber dem Gegenstück kippbar ist, überführbar ist.

Es kann allerdings auch von Vorteil sein, wenn die Stützeinrichtung in der Gebrauchsstellung zumindest abschnittsweise in der Aufnahmeöffnung zwischen dem Stutzen und dem Gegenstück angeordnet ist, und/oder in der Nicht-Gebrauchsstellung außerhalb der Aufnahmeöffnung angeordnet ist.

Es kann sich als hilfreich erweisen, wenn die Stützeinrichtung in wenigstens einer Stellung gegenüber dem Stutzen und/oder dem Gegenstück arretierbar, vorzugsweise kraftschlüssig und/oder formschlüssig verrastbar ist, wobei die Stützeinrichtung bevorzugt in der Gebrauchsstellung am Gegenstück verrastet ist.

Es kann nützlich sein, wenn die Stützeinrichtung in der Gebrauchsstellung einen Abstand zwischen dem Stutzen und dem Gegenstück in radialer Richtung, vorzugsweise auf diametral gegenüberliegenden Seiten des Stutzens, lückenlos überbrückt.

Es kann besonders nützlich sein, wenn die Stützeinrichtung derart ausgebildet ist, um die Aufnahmeöffnung vorzugsweise dichtend zu verschließen. Dadurch kann verhindert werden, dass die Aufnahmeöffnung verschmutzt und bspw. die Rasteinrichtung blockiert.

Bevorzugte Weiterbildungen der Erfindung ergeben sich durch Kombinationen der in den Ansprüchen oder in der Beschreibung genannten Merkmale.

### Kurze Beschreibung der Zeichnungen

- Figur 1: zeigt eine Vorderansicht der erfindungsgemäßen Verbindungsanordnung, wobei sich die Sicherungseinrichtung in der Lösestellung befindet und die Stützeinrichtung in der Nicht-Gebrauchsstellung befindet.
- Figur 2: zeigt eine Schnittansicht der erfindungsgemäßen Verbindungsanordnung entlang der Line II-II aus Figur 1 in einer Schnittansicht der erfindungsgemäßen Verbindungsanordnung, wobei sich die Stützeinrichtung in der Gebrauchsstellung befindet und einen Spalt zwischen dem Stutzen und dem Gegenstück lückenlos überbrückt, so dass der Stutzen kippsicher am Gegenstück abgestützt ist.
- Figur 3: zeigt eine alternative Ausführung der erfindungsgemäßen Verbindungsanordnung aus Figur 2.

### Detaillierte Beschreibung des bevorzugten Ausführungsbeispiels

Die bevorzugte Ausführung und Anwendung der Erfindung wird nachstehend mit Bezug auf die Zeichnungen im Detail erläutert.

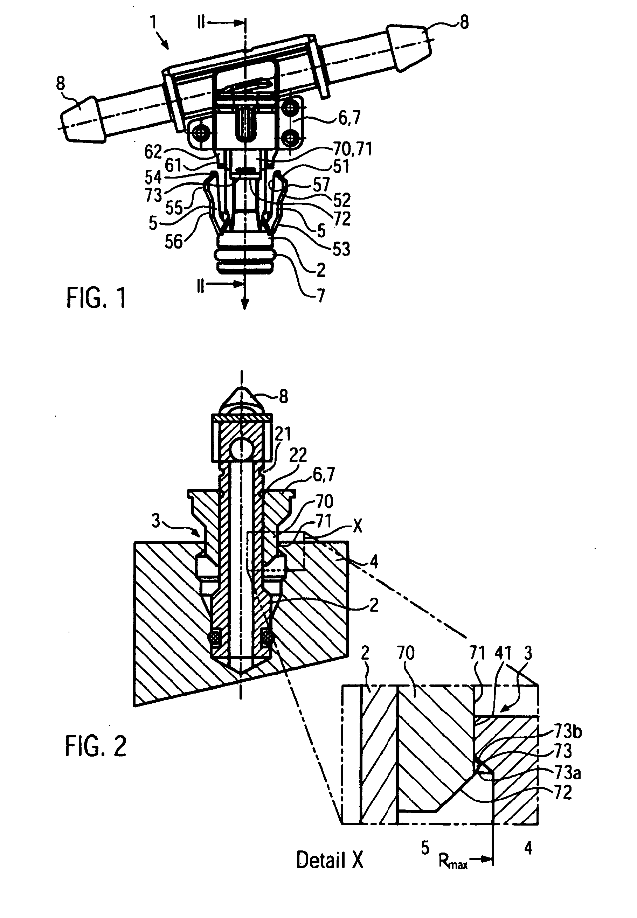

Die Erfindung betrifft eine als Leckölstecker ausgebildete Steck-Schnellkupplung 1 für Fluidleitungen. Die erfindungsgemäße Schnellkupplung 1 umfasst einen einstückigen, im Wesentlichen T-förmigen Körper aus glasfaserverstärktem Kunststoff (z.B. PA66+6 GF30 bzw. Polyamid 66+6 mit 30% Glasfaseranteil) mit einem Stutzen 2 und einem quer zum Stutzen 2 angeordneten oberen Teil. Der Stutzen 2 ist dichtend in eine Aufnahmeöffnung 3 eines Gegenstücks 4 einsteckbar. Im Stutzen 2 erstreckt sich eine Stichleitung zu der Leitung, die sich im oberen Teil des Körpers zwischen zwei konusförmigen Anschlusstücken 8 erstreckt. Die Leitungsachse der Stichleitung, die nachfolgend auch als Achse des Stutzens 2 bezeichnet wird, schließt gegenüber der Achse der Leitung zwischen den Anschlusstücken 8 einen Winkel von ca. 75°ein. Anzuschließende Leckölleitungen bzw. Anschlussleitungen sind auf die Anschlusstücke 8 aufsteckbar. In Einsteckrichtung der Schnellkupplung 1, die durch den Pfeil in Figur 1 angezeigt wird, ist an einem zylindrischen Ende des Stutzens 2 ein Dichtungsring 7 in einer umlaufenden Nut gehaltenen. Oberhalb des zylindrischen Endteils des Stutzens 2 sind Nuten 21, 22 am Stutzen 2 ausgebildet.

Die Rasteinrichtung umfasst zwei identisch ausgebildete, federnde Rastarme 5, die auf diametral gegenüber liegenden Seiten der Achse des Stutzens 2 entgegen der Einsteckrichtung vom Stutzen 2 abragen und mit dem Gegenstück 4 in Rasteingriff bringbar sind. Jeder Rastarm 5 weist eine Keilfläche 51 auf, die im Wesentlichen am freien Ende des Rastarms 5 angrenzend an den größten Radius des Rastarms 5 ausgebildet ist und entgegen der Einsteckrichtung vom Stutzen 2 abweist. Die Keilfläche 51 weist in etwa einen Winkel von 45° zur Achse des Stutzens 2 auf. Unmittelbar am freien Ende des Rastarms 5 ist ein Anschlag 54 ausgebildet. Des weiteren weist jeder Rastarm 5 an der Außenseite zwei Keilflächen 52, 53 auf, die in Einsteckrichtung vom Stutzen 2 abweisen, wobei die Keilfläche 52 angrenzend an den größten Radius des Rastarms 5 ausgebildet ist und die Keilfläche 53 unmittelbar angrenzend an den zylindrischen Teil des Stutzens 2 ausgebildet ist. Die Keilflächen 52, 53 weisen jeweils in etwa einen Winkel von 20° zur Achse des Stutzens 2 auf. Aufgrund der unterschiedlichen Neigungswinkel der Keilflächen 51 und 52 zur Achse des Stutzens 2 ist eine Einsteckkraft des Stutzens 2 kleiner als eine Auszugkraft des Stutzens 2. Zwischen den Keilflächen 51, 52 und 53 befinden sich Gleitflächen 55 und 56, die im Wesentlichen parallel zur Achse des Stutzens 2 verlaufen, wobei die Gleitfläche 55 den größten Radius des Rastarms 5 definiert. Eine zum Stutzen 2 weisende Innenseite 57 des Rastarms 5 ist als Keilfläche ausgebildet und ist vom Fußpunkt bis zum Ende des Rastarms 5 kontinuierlich gegenüber der Achse des Stutzens 2 geneigt, vorzugsweise in einem Winkel von ca. 10°.

Die Sicherungseinrichtung 6 und die Stützeinrichtung 7 sind im vorliegenden Ausführungsbeispiel einteilig ausgebildet und bilden einen entlang der Achse des Stutzens 2 verschieblichen und verdrehsicher auf dem Stutzen 2 gelagerten Schieber. Der Schieber umfasst zwei im Wesentlichen schalenförmige Teile, die um den Stutzen 2 ringförmig geschlossen sind, so dass der Schieber unverlierbar am Stutzen 2 gelagert ist. Zur Montage der schalenförmigen Teile werden Schweißnocken des einen Teils durch komplementäre Schweißnockenöffnungen des anderen Teils gesteckt und anschließend verschweißt, um die beiden Teile form- und stoffschlüssig zu verbinden. Durch Verschiebung des Schiebers auf dem Stutzen 2 in bzw. entgegen der Einsteckrichtung ist die Sicherungseinrichtung 6 zwischen einer Lösestellung, in welcher der Rasteingriff der Schnellkupplung 1 lösbar ist, und einer Sicherungsstellung, in welcher der Rasteingriff sichergestellt ist, überführbar. Gleichzeitig ist die Stützeinrichtung 7 durch Verschiebung des Schiebers auf dem Stutzen 2 zwischen einer Nicht-Gebrauchsstellung, in welcher der Stutzen 2 gegenüber dem Gegenstück 4 kippbar ist, und einer Gebrauchsstellung, in welcher die Stützeinrichtung 7 den Stutzen 2 kippsicher am Gegenstück 4 abstützt, überführbar. Ein Vorsprung an der Innenseite des Schiebers bildet das zu den Nuten 21, 22 komplementäre Rastmittel, um den Schieber im Rasteingriff am Stutzen 2 zu halten, wenn sich die Sicherungseinrichtung 6 vorzugsweise in der Lösestellung und/oder in der Sicherungsstellung befindet und die Stützeinrichtung 7 in der Nicht-Gebrauchsstellung und/oder Gebrauchsstellung befindet. Die einteilige Ausführung der Sicherungseinrichtung 6 und der Stützeinrichtung 7 bietet den Vorteil, dass beide Einrichtungen gemeinsam betätigbar sind. Die Sicherungseinrichtung 6 und die Stützeinrichtung 7 können allerdings auch funktional voneinander getrennt werden und eigenständige Einrichtungen bilden.

Die Sicherungseinrichtung 6 umfasst zwei identische Keilabschnitte 61, die auf gegenüberliegenden Seiten des Stutzens 2 jeweils entsprechend zu den Positionen der Rastarme 5 angeordnet sind und im Wesentlichen parallel zur Achse des Stutzens 2 vom Schieber in Einsteckrichtung hervorstehen. In der Lösestellung befindet sich die Sicherungseinrichtung 6 mit den Rastarmen 5 nicht in Eingriff, so dass die Rastarme 5 radial nach innen verdrängbar sind. Beim Überführen der Sicherungseinrichtung 6 von der Lösestellung in die Sicherungsstellung wirkt die Sicherungseinrichtung 6 über einen Keileingriff mit den Rastarmen 5 derart zusammen, dass die Rastarme 5 symmetrisch zunehmend vom Stutzen 1 abgespreizt werden. Auch in der Sicherungsstellung werden die Rastarme 5 vom Stutzen 1 abgespreizt. Die Sicherungseinrichtung 6 weist an jedem Keilabschnitt 61 eine in Einsteckrichtung vom Stutzen 2 abweisende Keilfläche 62 auf, die sich in der Sicherungsstellung mit dem Rastarm 5 in Keileingriff befindet. Diese Keilfläche 62 weist keine konstante Neigung gegenüber der Achse des Stutzens 2 auf, sondern die Neigung nimmt ausgehend von einem in Einsteckrichtung gelegenen, führenden Ende des Keilabschnitts 61 entgegen der Einsteckrichtung zu. Dadurch weist der Keilabschnitt 61 bzw. die Keilfläche 62 eine konkave Wölbung bzw. eine Krümmung auf, wobei der Krümmungsradius zwischen 1,0 mm und 15,0 mm, vorzugsweise zwischen 2,0 mm und 10,0 mm, bevorzugt ca. 5,0 mm, beträgt. Dadurch kann mit zunehmender Einschiebetiefe des Keilabschnitts 61 in den Spalt zwischen den Rastarmen 5 und dem Stutzen 2 eine ansteigende Spreizung pro Einschiebetiefe erzielt werden.

Die Stützeinrichtung 7 umfasst zwei identische Stützabschnitte 70, die auf gegenüberliegenden Seiten des Stutzens 2 jeweils zwischen den Keilabschnitten 61 der Sicherungseinrichtung 6 bzw. zwischen den Rastarmen 5 angeordnet sind und im Wesentlichen parallel zur Achse des Stutzens 2 vom Schieber in Einsteckrichtung hervorstehen. An der dem Stutzen 2 zugewandten Seite umfasst jeder Stützabschnitt 70 eine Gleitfläche, die sich mit dem Stutzen 2 in Gleiteingriff befindet und eine der Außenkontur des Stutzens 2 angepasste Innenkontur aufweist. Jeder Stützabschnitt 70 umfasst eine konvex gewölbte, als Zylindermantelabschnitt ausgebildete Stützfläche 71, die vom Stutzen 2 abweist und einer der Innenkontur der Aufnahmeöffnung 3 angepasste Außenkontur aufweist. Der Radius der Stützfläche 71 bzw. der Abstand der Stützfläche 71 zur Achse des Stutzens 2 ist mindestens so groß wie der engste Querschnitt der Aufnahmeöffnung 3 im Bereich der Hinterschneidung 41. Dadurch liegt die Stützfläche 71 unter Vorspannung am engsten Querschnitt der Aufnahmeöffnung 3 an, wenn sich die Stützeinrichtung 7 in der Gebrauchsstellung 6 befindet und der Stützabschnitt 70 innerhalb der Aufnahmeöffnung 3 angeordnet ist. An dem in Einsteckrichtung gelegenen, führenden Ende des Stützabschnitts 70 schließt sich eine in Einsteckrichtung vom Stutzen 2 abweisende Keilfläche 72 an die Stützfläche 71 an. Auf der Stützfläche 71 ist ein wulstförmiger Rastvorsprung 73 ausgebildet, der radial zur Achse des Stutzens 2 über die Stützfläche 71 nach außen hervorsteht. Der Rastvorsprung 73 kann einteilig mit dem Stützabschnitt 70 ausgebildet sein oder aus einem elastischen Material nachträglich angeformt werden. Durch den Rastvorsprung 73 wird der Stützabschnitt 70 nach dem Überwinden des engsten Querschnitts der Aufnahmeöffnung 3 am Gegenstück 4 verrastet.

Die Stützabschnitte 70 der Stützeinrichtung 7 können mit den Keilabschnitten 61 der Sicherungseinrichtung 6 verbunden sein, um einen den Stutzen 2 umschließenden Ring zu bilden. Ferner kann die Sicherungseinrichtung 6 und/oder die Stützeinrichtung 7 derart ausgebildet sein, um die Aufnahmeöffnung 3 vorzugsweise dichtend zu verschließen. Die Aufnahmeöffnung 3 ist bevorzugt dichtend verschlossen, wenn sich die Sicherungseinrichtung 6 in der Sicherungsstellung befindet und/oder die Stützeinrichtung 7 in der Gebrauchsstellung befindet.

Die Schnellkupplung 1 kann zusätzlich eine Anzeigeeinrichtung aufweisen, die zu erkennen gibt, in welcher Stellung sich der Schieber befindet. Diese Anzeigeeinrichtung ist vorzugsweise eine farbige Markierung, die in einer ersten Stellung unter dem Schieber unsichtbar verdeckt liegt und in einer zweiten Stellung freiliegt und sichtbar ist.

Figur 2 zeigt eine Schnittansicht der erfindungsgemäßen Schnellkupplung 1 gemäß Figur 1 im Rasteingriff mit dem Gegenstück 4, wobei sich die Sicherungseinrichtung 6 in der Sicherungsstellung befindet und die Stützeinrichtung 7 in der Gebrauchsstellung befindet. Für identische Komponenten werden identische Bezugszeichen wie in Figur 1 verwendet und auf eine wiederholte Beschreibung wird verzichtet. Es ist erkennbar, dass die Stützabschnitte 70 abschnittsweise in der Aufnahmeöffnung 3 aufgenommen sind, so dass sie in der dargestellten Schnittansicht den Abstand zwischen dem Stutzen 2 und dem Gegenstück 4 in radialer Richtung auf diametral gegenüberliegenden Seiten des Stutzens 2 lückenlos überbrücken und den Stutzen 2 einklemmen. Ein Detail X zeigt den Eingriffszustand zwischen der Stützeinrichtung 7 und dem Gegenstück 4. Die Geometrie des Stützabschnitts 70 und insbesondere die Geometrie des Rastvorsprungs 73 ist derart beschaffen, dass die zum Einstecken in die Aufnahmeöffnung 3 erforderliche Kraft kleiner ist als die zum Herausziehen aus der Aufnahmeöffnung 3 erforderliche Kraft, was durch Keilflächen 73a, 73b bewerkstelligt wird, die in und entgegen der Einsteckrichtung vom Stutzen 2 abweisen, wobei die in Einsteckrichtung vom Stutzen 2 abweisende Keilfläche 73a bevorzugt einen kleineren bzw. spitzeren Winkel zur Achse des Stutzens 2 einschließt als die entgegen der Einsteckrichtung vom Stutzen 2 abweisende Keilfläche 73b.

Die bevorzugte Anwendung der Erfindung wird nachstehend mit Bezug auf die Zeichnungen im Detail beschrieben.

Die erfindungsgemäße Schnellkupplung 1 wird in Einsteckrichtung in die Aufnahmeöffnung 3 des Gegenstücks 4 eingesteckt, wobei der Schieber in oberer Stellung in der Nut 21 am Stutzen 2 verrastet ist. Dabei befindet sich die Sicherungseinrichtung 6 in der Lösestellung und die Stützeinrichtung 7 in der Nicht-Gebrauchsstellung. Beim Einsteckvorgang wird der Stutzen 2 zunächst über die in Einsteckrichtung vom Stutzen 2 abweisenden Keilflächen 52, 53 der Rastarme in der Aufnahmeöffnung 3 zentriert. Ohne Aufbringen einer Kraft in Einsteckrichtung (Einsteckkraft) liegen die in Einsteckrichtung vom Stutzen 2 abweisenden Keilflächen 52 an der Hinterschneidung 41 an. Durch Aufbringen einer Einsteckkraft wirken die Rastarme 5 über Keileingriffe mit der Hinterschneidung 41 zusammen, so dass die Rastarme 5 radial nach innen verdrängt werden, um mit der Gleitfläche 55 über die Hinterschneidung 41 zu gleiten. Aufgrund der federnden Eigenschaften der Rastarme 5 stellen sich diese zurück in eine vom Stutzen 2 abragende Position, so dass die Rastarme 5 hinter der Hinterschneidung 41 verrasten. Die entgegen der Einsteckrichtung vom Stutzen 2 abweisenden Keilflächen 51 gelangen mit der Hinterschneidung 41 in Eingriff, wobei der Anschlag 54 in radialer Richtung zwischen dem zylindrischen Teil des Stutzens 2 und der Hinterschneidung 41 liegt. Damit befindet sich die Schnellkupplung 1 im Rasteingriff mit dem Gegenstück 4.

Der Schieber wird nun auf dem Stutzen 2 in Einsteckrichtung von der oberen Stellung in die untere Stellung verschoben. Dabei wird die Sicherungseinrichtung 6 von der Lösestellung in die Sicherungsstellung überführt, und gleichzeitig die Stützeinrichtung 7 von der Nicht-Gebrauchsstellung in die Gebrauchsstellung überführt. Die Keilflächen 62 der Keilabschnitte 61 wirken beim Überführen der Sicherungseinrichtung 6 von der Lösestellung in die Sicherungsstellung über den Keileingriff mit den Rastarmen 5 derart zusammen, dass die Rastarme 5 mit zunehmender Einschiebetiefe symmetrisch zunehmend vom Stutzen 1 abgespreizt und über einen Keileingriff mit der Hinterschneidung 41 tiefer in die Aufnahmeöffnung 3 gedrängt werden.

Gleichzeitig mit dem Überführen der Sicherungseinrichtung 6 von der Lösestellung in die Sicherungsstellung wird die Stützeinrichtung. 7 von der Nicht-Gebrauchsstellung in die Gebrauchs-stellung überführt. Dabei wird die Keilfläche 72 des Stützabschnitts 70 in Einsteckrichtung in die Aufnahmeöffnung 3 eingebracht, so dass der Stutzen 2 in der Aufnahmeöffnung 3 zentriert wird und die Achse des Stutzens 2 mit der Achse der Aufnahmeöffnung 3 zusammenfällt. Wird der Schieber nun weiter in Einsteckrichtung in die Aufnahmeöffnung 3 geschoben, gelangt der Rastvorsprung 73 mit der in Einsteckrichtung vom Stutzen 2 abweisenden Keilfläche 73a voran in Kontakt mit dem engsten Querschnitt der Aufnahmeöffnung 3. Dabei wird der Rastvorsprung 73 radial nach innen gedrückt, bis der Schieber durch den engsten Querschnitt der Aufnahmeöffnung 3 hindurchpasst. Nach dem Überwinden des engsten Querschnitts der Aufnahmeöffnung 3 nimmt der Rastvorsprung 73 aufgrund der elastischen Rückstellkräfte seine ursprüngliche Form ein, so dass die Stützeinrichtung 7 am Gegenstück 4 verrastet ist. In diesem Zustand ist der Stutzen 2 von den Stützabschnitten 70 eingeklemmt und die Aufnahmeöffnung 3 durch den Schieber bzw. durch die Sicherungseinrichtung 6 und/oder die Stützeinrichtung 7 dichtend verschlossen. In der unteren Stellung des Schiebers greift der Vorsprung an der Innenseite des Schiebers in die Nut 22 ein, so dass sich der Schieber mit dem Stutzen 2 in Rasteingriff befindet bzw. am Stutzen 2 verrastet ist.

Durch Verschieben des Schiebers auf dem Stutzen 2 entgegen der Einsteckrichtung von der unteren in die obere Stellung kann die Sicherungseinrichtung 6 wieder von der Sicherungsstellung in die Lösestellung bzw. die Stützeinrichtung 7 wieder von der Gebrauchsstellung in die Nicht-Gebrauchsstellung überführt werden. In der Lösestellung befindet sich die Sicherungseinrichtung 6 mit den Rastarmen 5 nicht in Eingriff, so dass die Rastarme 5 radial nach innen verdrängbar sind. In der Nicht-Gebrauchsstellung befindet sich die Stützeinrichtung 7 nicht mit dem Gegenstück 4 in Eingriff, so dass der Stutzen 2 bei bestehendem Rasteingriff gegenüber dem Gegenstück 4 gekippt werden kann. Durch Aufbringen einer Kraft entgegen der Einsteckrichtung (Auszugkraft) kann die Schnellkupplung 1 aus der Aufnahmeöffnung 3 herausgezogen werden. In der Lösestellung der Sicherungseinrichtung 6 bzw. in der Nicht-Gebrauchsstellung der Stützeinrichtung 7 greift der Vorsprung an der Innenseite des Schiebers in die Nut 21 ein, so dass sich der Schieber mit dem Stutzen 2 in Rasteingriff befindet bzw. verrastet ist. Die Sicherungseinrichtung 6 und die Stützeinrichtung 7 sind somit reversibel zwischen Lösestellung und Sicherungsstellung bzw. Gebrauchsstellung und Nicht-Gebrauchsstellung überführbar.

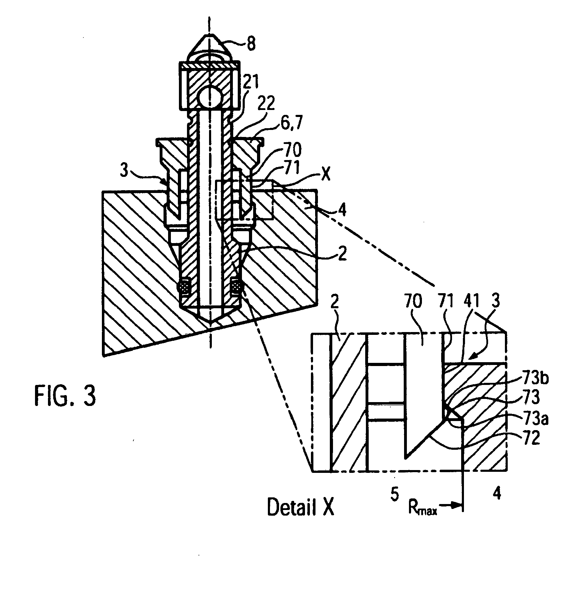

Eine alternative Ausführung der Erfindung ist in Figur 3 dargestellt. Für identische Komponenten werden identische Bezugszeichen wie in Figuren 1 und 2 verwendet und auf eine wiederholte Beschreibung wird verzichtet. Ein Detail Y zeigt den Eingriffszustand zwischen der Stützeinrichtung 7 und dem Gegenstück 4. Abweichend von der Ausführung gemäß Figur 2 sind die Stützabschnitte 70 als in Einsteckrichtung hervorstehende Federzungen ausgebildet. Dabei werden die als Federzungen ausgebildeten Stützabschnitte 70 beim Überwinden des engsten Querschnitts der Aufnahmeöffnung 3 radial nach innen ausgelenkt, um nach dem Überwinden des engsten Querschnitts der Aufnahmeöffnung 3 ihre ursprüngliche Form einzunehmen, so dass die Stützeinrichtung 7 an dem Gegenstück 4 verrastet ist.

## Patentansprüche

1. Verbindungsanordnung mit einer Schnellkupplung (1) für Fluidleitungen und einem Verbindungsgegenstück (4) mit einer Aufnahmeöffnung (3), wobei die Schnellkupplung (1) umfasst: einen Stutzen (2), welcher dichtend in die Aufnahmeöffnung (3) des Gegenstücks (4) einsteckbar ist und über eine Rasteinrichtung (5) mit dem Gegenstück (4) in Rasteingriff bringbar ist; wobei die Schnellkupplung (1) wenigstens eine Stützeinrichtung (7) aufweist, um den Stutzen (2) kippsicher am Gegenstück (4) abzustützen, wobei die Stützeinrichtung (7) gegenüber dem Stutzen (2) bewegbar ist, und, wenn sich die Rasteinrichtung (5) mit dem Gegenstück (4) in Rasteingriff befindet, zwischen einer Gebrauchsstellung, in welcher die Stützeinrichtung (7) den Stutzen (2) kippsicher am Gegenstück (4) abstützt, und einer Nicht-Gebrauchsstellung, in welcher der Stutzen (2) gegenüber dem Gegenstück (4) kippbar ist, überführbar ist, **dadurch gekennzeichnet, dass** die Stützeinrichtung (7) in der Gebrauchsstellung einen Abstand zwischen dem Stutzen (2) und dem Gegenstück (4) in radialer Richtung, vorzugsweise auf diametral gegenüberliegenden Seiten des Stutzens (2), lückenlos überbrückt .

2. Verbindungsanordnung nach Anspruch 1, **dadurch gekennzeichnet, dass** die Stützeinrichtung (7) entlang der Achse des Stutzens (2) beweglich, vorzugsweise verdrehsicher, am Stutzen (2) gehalten ist.

3. Verbindungsanordnung nach einem der vorangegangenen Ansprüche, dadurch gekenntzeichnet, dass die Stützeinrichtung (7) unverlierbar, vorzugsweise unlösbar, mit dem Stutzen (2) verbunden ist.

4. Verbindungsanordnung nach einem der vorangegangenen Ansprüche, **dadurch gekennzeichnet, dass** die Stützeinrichtung (7) in wenigstens einer Stellung gegenüber dem Stutzen (2) und/oder dem Gegenstück (4) arretierbar, vorzugsweise kraftschlüssig und/oder formschlüssig verrastbar ist.

5. Verbindungsanordnung nach einem der vorangegangenen Ansprüche, **dadurch gekennzeichnet, dass** die Stützeinrichtung (7) derart ausgebildet ist, um die Aufnahmeöffnung (3) vorzugsweise dichtend zu verschließen.

6. Verbindungsanordnung nach einem der vorangegangenen Ansprüche, **dadurch gekennzeichnet, dass** die Stützeinrichtung (7) zumindest einen Stützabschnitt (70) aufweist, der zumindest eine der folgenden Anforderungen erfüllt:
a. Der Stützabschnitt (70) ist als Federzunge ausgebildet.
b. Der Stützabschnitt (70) ist in radialer Richtung federelastisch ausgebildet.
c. Der Stützabschnitt (70) ist mit dem Stutzen (2) und/oder dem Gegenstück (4) kraftschlüssig und/oder formschlüssig in Eingriff bringbar, vorzugsweise verrastbar.
d. Der Stützabschnitt (70) erstreckt sich im Wesentlichen parallel zur Achse des Stutzens (2), vorzugsweise in Einsteckrichtung.
e. Der Stützabschnitt (70) umfasst eine dem Stutzen (2) zugewandte Gleitfläche, die sich mit dem Stutzen (2) in Gleiteingriff befindet und bevorzugt eine der Außenkontur des Stutzens (2) angepasste Innenkontur aufweist.
f. Der Stützabschnitt (70) umfasst eine vom Stutzen (2) abweisende Stützfläche (71), die vorzugsweise als Zylindermantelabschnitt ausgebildet ist.
g. Der Stützabschnitt (70) umfasst eine in Einsteckrichtung vom Stutzen (2) abweisende Keilfläche (72), die vorzugsweise einen spitzen Winkel zur Achse des Stutzens (2) einschließt und bevorzugt als Kegelmantelabschnitt ausgebildet ist.
h. Der Stützabschnitt (70) umfasst ein Rastmittel (73), das mit dem Gegenstück (4) in Rasteingriff bringbar ist, vorzugsweise einen radial über die Stützfläche (71) vorstehenden Rastvorsprung (73), wobei das Rastmittel (73) bevorzugt wenigstens eine in und wenigstens eine entgegen der Einsteckrichtung vom Stutzen (2) abweisende Keilfläche (73a, 73b) umfasst, wobei die in Einsteckrichtung vom Stutzen (2) abweisende Keilfläche (73a) einen kleineren Winkel zur Achse des Stutzens (2) einschließt als die entgegen der Einsteckrichtung vom Stutzen (2) abweisende Keilfläche (73b), so dass die erforderliche Kraft, um das Rastmittel (73) mit dem Gegenstück (4) in Rasteingriff zu bringen, kleiner ist als die erforderliche Kraft, um den Rasteingriff zu lösen.
i. Der Stützabschnitt (70) umfasst einen über die Stützfläche (71) radial vorstehenden Anschlag, der die Einstecktiefe des Stützabschnitts (70) in der Aufnahmeöffnung des Gegenstücks beschränkt.

7. Verbindungsanordnung nach einem der vorangegangenen Ansprüche, **dadurch gekennzeichnet, dass** die Stützeinrichtung (7) wenigstens zwei Stützabschnitte (70) aufweist, die zumindest eine der folgenden Anforderungen erfüllen:
a. Die Stützabschnitte (70) sind in regelmäßigen Abständen zueinander um den Umfang des Stutzens (2) angeordnet.
b. Die Stützabschnitte (70) sind rotationssymmetrisch um die Achse des Stutzens (2) angeordnet.
c. Die Stützabschnitte (70) sind auf zwei einander diametral gegenüberliegenden Seiten des Stutzens (2) angeordnet.
d. Die Stützabschnitte (70) sind zwischen den Rastarmen (5) angeordnet.
e. Die Stützabschnitte (70) sind identisch ausgebildet.

8. Verbindungsanordnung nach einem der vorangegangenen Ansprüche, **dadurch gekennzeichnet, dass** die Schnellkupplung (1) eine Sicherungseinrichtung (6) aufweist, die zwischen einer Sicherungsstellung, in welcher der Rasteingriff der Rasteinrichtung (5) mit dem Gegenstück (4) gegen Lösen gesichert ist, und einer Lösestellung, in welcher der Rasteingriff lösbar ist, überführbar ist.

9. Verbindungsanordnung nach einem der vorangegangenen Ansprüche, **dadurch gekennzeichnet, dass** die Stützeinrichtung (7) vorzugsweise fest, bevorzugt einstückig, mit der Sicherungseinrichtung (6) verbunden ist, oder einteilig mit der Sicherungseinrichtung (6) ausgebildet ist.

10. Verbindungsanordnung nach Anspruch 1, **dadurch gekennzeichnet, dass** die Stützeinrichtung (7) in der Gebrauchsstellung zumindest abschnittsweise in der Aufnahmeöffnung (3) zwischen dem Stutzen (2) und dem Gegenstück (4) angeordnet ist, und/oder in der Nicht-Gebrauchsstellung außerhalb der Aufnahmeöffnung (3) angeordnet ist.

11. Verbindungsanordnung nach einem der Ansprüche 1 oder 10, **dadurch gekennzeichnet, dass** die Stützeinrichtung (7) in wenigstens einer Stellung gegenüber dem Gegenstück (4) arretierbar, vorzugsweise kraftschlüssig und/oder formschlüssig verrastbar ist, wobei die Stützeinrichtung (7) bevorzugt in der Gebrauchsstellung am Gegenstück (4) verrastet ist.

12. Verbindungsanordnung nach einem der Ansprüche 1 oder 10 bis 11, **dadurch gekennzeichnet, dass** die Stützeinrichtung (7) derart ausgebildet ist, um die Aufnahmeöffnung (3) zumindest in der Gebrauchsstellung vorzugsweise dichtend zu verschließen.

## Claims

1. A connection device comprising a quick connector (1) for fluid lines and a connection counterpart (4) with a receiving opening (3), the quick connector (1) comprising:
a nozzle (2) which is pluggable in a sealing fashion into a receiving opening (3) of the counterpart (4) and can be brought into locking engagement via latching means (5) with the counterpart (4);
whereas the quick connector (1) comprises at least one support means (7) for supporting the nozzle (2) on the counterpart such that the nozzle (2) is secured against tilting,
wherein the support means (7) is movable relative to the nozzle (2), and, when the latching means (5) is in locking engagement with the counterpart (4), the support means (7) is adapted to be transferred between a position of use, at which the support means (7) supports the nozzle (2) on the counterpart (4) such that it is secured against tilting, and a position of non-use, at which the nozzle (2) is tiltable relative to the counterpart (4),
**characterized in that** the support means (7) in the position of use, bridges a distance between the nozzle (2) and the counterpart (4) in a radial direction without any gaps being formed, preferably on diametrically opposite sides of the nozzle (2)..

2. The connection device according to claim 1, **characterized in that** the support means (7) is held on the nozzle (2) movable along an axis of the nozzle (2), preferably secured against rotation.

3. The connection device according to any one of the preceding claims, **characterized in that** the support means (7) is captively connected, preferably inseparable, to the nozzle (2).

4. The connection device according to any one of the preceding claims, **characterized in that** the support means (7) is, in at least one position, lockable relative to the nozzle (2) and/or the counterpart (4), preferably latchable by force-fit and/or .by form fit.

5. The connection device according to any one of the preceding claims, **characterized in that** the support means (7) is configured such that it closes, preferably seals, the receiving opening (3).

6. The connection device according to any one of the preceding claims, **characterized in that** the support means (7) comprises at least one support portion (70) which fulfills at least one of the following requirements:
a. the support portion (70) is configured as a flexible tongue.
b. the support portion (70) is configured such that it is resilient in a radial direction.
c. the support portion (70) is engageable, preferably latchable, with the nozzle (2) and/or the counterpart (4) by force-fit and/or form fit.
d. the support portion (70) extends substantially parallel to the axis of the nozzle (2), preferably in the insertion direction.
e. the support portion (70) comprises a sliding surface which faces the nozzle (2) and which is in sliding engagement with said nozzle (2), said sliding surface having an inner contour that is adapted to an outer contour of the nozzle (2).
f. the support portion (70) comprises a support surface (71) which faces away from the nozzle (2) and being preferably configured as a cylinder surface section.
g. the support portion (70) comprises a wedge shaped surface (72) which faces away from the nozzle (2) in a direction of insertion, preferably enclosing an acute angle with the axis of the nozzle (2) and being preferably configured as a section of a cone.
h. the support portion (70) comprises a locking means (73), preferably a radially from the support surface (71) projecting locking projection (73), which is adapted to be brought into locking engagement with the counterpart (4), said locking means (73) preferably comprising at least one wedge surface (73a, 73b) facing away from the nozzle (2) and in a direction of insertion and at least one wedge surface (73a, 73b) facing away from the nozzle (2) and in a direction opposite to the direction of insertion, the wedge surface (73a) facing away from the nozzle (2) and in the direction of insertion is enclosing a smaller angle with an axis of the nozzle (2) than the wedge surface (73b) facing away from the nozzle (2) and in a direction opposite to the direction of insertion, so that a force required for establishing a locking engagement between the locking means (73) and a counterpart (4) is smaller than a force required for releasing the locking engagement.
i. the support portion (70) comprises a radially from the support surface (71) projecting stop which limits the insertion depth of the support portion (70) in the receiving opening of the counterpart (4).

7. The connection device according to any one of the preceding claims, **characterized in that** the support means (7) comprises at least two support portions (70) which fulfill at least one of the following requirements:
a. the support portions (70) are arranged at regular intervals along a circumference of the nozzle (2).
b. the support portions (70) are arranged rotationally symmetrical around the axis of the nozzle (2).
c. the support portions (70) are arranged on two diametrically opposed sides of the nozzle (2).
d. the support portions (70) are arranged between the latching arms (5).
e. the support portions (70) are formed identical to each other.

8. The connection device according to any one of the preceding claims, **characterized in that** the quick connector (1) has a safety means (6), which is adapted to be transferred between a safety position, at which a locking engagement between the latching means (5) and a counterpart (4) is secured against release, and a release position, at which the locking engagement can be released.

9. The connection device according to any one of the preceding claims, **characterized in that** the support means (7) is preferably firmly, particularly integrally, connected to the safety means, or formed integrally with the afety means (6).

10. The connection device according to claim 1, **characterized in that** when occupying the position of use, the support means (7) is, at least sectionwise, arranged in the receiving opening (3) between the nozzle (2) and the counterpart (4) and/or when occupying the position of non-use it is arranged outside of the receiving opening (3).

11. The connection device according to one of the claims 1 or 10, **characterized in that** the support means (7) in at least one of its positions is adapted to be lockable relative to the counterpart (4), preferably lockable by force-fit and/or form fit, at which the support means (7) is preferably locked on the counterpart (4) when it occupies its position of use.

12. The connection device according to one of the claims 1 or 10 or 11, **characterized in that** the support means (7) is configured such that, at least when occupying its position of use, it closes, preferably seals, the receiving opening (3).

## Revendications

1. Agencement de raccordement comprenant un raccord rapide (1) pour des conduites de fluide et une pièce de raccordement conjuguée (4) présentant une ouverture de réception (3), agencement
dans lequel le raccord rapide (1) comprend : un embout (2), qui peut être emmanché de manière étanche dans l'ouverture de réception (3) de la pièce conjuguée (4), et peut être amené en prise par encliquetage avec la pièce conjuguée (4) par l'intermédiaire d'un dispositif d'encliquetage (5),
dans lequel le raccord rapide (1) comporte au moins un dispositif d'appui de soutien (7) pour soutenir l'embout (2) de manière sécurisée contre le basculement, dans la pièce conjuguée (4),
dans lequel le dispositif d'appui de soutien (7) est mobile par rapport à l'embout (2) et peut, lorsque le dispositif d'encliquetage (5) se trouve en prise par encliquetage avec la pièce conjuguée (4), être transféré entre une position d'utilisation, dans laquelle le dispositif d'appui de soutien (7) soutient l'embout (2) de manière sécurisée contre le basculement dans la pièce conjuguée (4), et une position de non utilisation dans laquelle l'embout (2) peut basculer par rapport à la pièce conjuguée (4),
**caractérisé en ce que** le dispositif d'appui de soutien (7), dans la position d'utilisation, comble sans vide, dans la direction radiale, une distance d'espacement entre l'embout (2) et la pièce conjuguée (4), notamment sur deux côtés diamétralement opposés de l'embout (2).

2. Agencement de raccordement selon la revendication 1, **caractérisé en ce que** le dispositif d'appui de soutien (7) est maintenu sur l'embout (2), mobile le long de l'axe de l'embout (2), de préférence de manière arrêtée en rotation.

3. Agencement de raccordement selon l'une des revendications précédentes, **caractérisé en ce que** le dispositif d'appui de soutien (7) est relié de manière imperdable, de préférence inamovible, avec l'embout (2).

4. Agencement de raccordement selon l'une des revendications précédentes, **caractérisé en ce que** le dispositif d'appui de soutien (7) peut être arrêté, dans au moins une position, par rapport à l'embout (2) et/ou à la pièce conjuguée (4), de préférence par un encliquetage par adhérence et/ou complémentarité de formes.

5. Agencement de raccordement selon l'une des revendications précédentes, **caractérisé en ce que** le dispositif d'appui de soutien (7) est conçu pour fermer, de préférence de manière étanche, l'ouverture de réception (3).

6. Agencement de raccordement selon l'une des revendications précédentes, **caractérisé en ce que** le dispositif d'appui de soutien (7) présente au moins un tronçon d'appui de soutien (70), qui satisfait à au moins l'une des exigences suivantes :
a. Le tronçon d'appui de soutien (70) est réalisé en tant que languette de ressort.
b. Le tronçon d'appui de soutien (70) présente une élasticité de ressort dans la direction radiale.
c. Le tronçon d'appui de soutien (70) peut être amené en prise par adhérence et/ou par complémentarité de formes, de préférence être encliqueté, avec l'embout (2) et/ou la pièce conjuguée (4).
d. Le tronçon d'appui de soutien (70) s'étend sensiblement de manière parallèle à l'axe de l'embout (2), de préférence dans la direction d'emmanchement.
e. Le tronçon d'appui de soutien (70) comprend une surface de glissement dirigée vers l'embout (2), qui se trouve en prise de glissement avec l'embout (2), et présente de préférence un contour intérieur adapté au contour extérieur de l'embout (2).
f. Le tronçon d'appui de soutien (70) comprend une surface d'appui de soutien (71) éloignée de l'embout (2) et qui, de préférence, est réalisée sous la forme d'un tronçon d'enveloppe cylindrique.
g. Le tronçon d'appui de soutien (70) comprend une surface en coin (72) s'écartant de l'embout (2) dans la direction d'emmanchement, et qui, de préférence, forme un angle aigu avec l'axe de l'embout (2), et est de préférence réalisée en tant que tronçon d'enveloppe conique.
h. Le tronçon d'appui de soutien (70) comprend un moyen d'encliquetage (73), qui peut être amené en prise par encliquetage avec la pièce conjuguée (4), de préférence une protubérance d'encliquetage (73) qui fait saillie radialement de la surface d'appui de soutien (71), le moyen d'encliquetage (73) présentant de préférence au moins une surface en coin (73a, 73b) s'écartant de l'embout (2) dans la direction d'emmanchement et au moins une surface en coin s'écartant à l'encontre de cette direction d'emmanchement, la surface en coin (73a) s'écartant de l'embout (2) dans la direction d'emmanchement formant un angle par rapport à l'axe de l'embout (2), plus petit que celui de la surface en coin (73b) s'écartant de l'embout (2) à l'encontre de la direction d'emmanchement, de sorte que la force nécessaire pour amener le moyen d'encliquetage (73) en prise d'encliquetage avec la pièce conjuguée (4), est inférieure à la force nécessaire pour interrompre la prise par encliquetage.
i. Le tronçon d'appui de soutien (70) comprend une butée en saillie radiale de la surface d'appui de soutien (71), qui limite la profondeur d'emmanchement du tronçon d'appui de soutien (70) dans l'ouverture de réception de la pièce conjuguée.

7. Agencement de raccordement selon l'une des revendications précédentes, **caractérisé en ce que** le dispositif d'appui de soutien (7) présente au moins deux tronçons d'appui de soutien (70) qui satisfont à au moins l'une des exigences suivantes :
a. Les tronçons d'appui de soutien (70) sont agencés autour de la périphérie de l'embout (2) selon des espacements réciproques réguliers.
b. Les tronçons d'appui de soutien (70) sont agencés selon une symétrie de rotation autour de l'axe de l'embout (2).
c. Les tronçons d'appui de soutien (70) sont agencés sur deux côtés diamétralement opposés de l'embout (2).
d. Les tronçons d'appui de soutien (70) sont agencés entre les bras d'encliquetage (5).
e. Les tronçons d'appui de soutien (70) sont de configuration identique.

8. Agencement de raccordement selon l'une des revendications précédentes, **caractérisé en ce que** le raccord rapide (1) présente un dispositif de sécurité (6), qui peut être transféré entre une position de sécurité, dans laquelle la prise par encliquetage du dispositif d'encliquetage (5) avec la pièce conjuguée (4) est sécurisée à l'encontre d'une interruption, et une position d'interruption, dans laquelle la prise par encliquetage peut être interrompue.

9. Agencement de raccordement selon l'une des revendications précédentes, **caractérisé en ce que** le dispositif d'appui de soutien (7) est relié, de préférence de manière fixe, de façon préférée d'un seul tenant, avec le dispositif de sécurité (6), ou est réalisé en une seule pièce avec le dispositif de sécurité (6) .

10. Agencement de raccordement selon la revendication 1, **caractérisé en ce que** le dispositif d'appui de soutien (7) est agencé, dans la position d'utilisation, au moins en partie dans l'ouverture de réception (3) entre l'embout (2) et la pièce conjuguée (4), et/ou est agencé, dans la position de non utilisation, à l'extérieur de l'ouverture de réception (3) .

11. Agencement de raccordement selon l'une des revendications 1 à 10, **caractérisé en ce que** le dispositif d'appui de soutien (7) peut être arrêté, dans au moins une position, par rapport à la pièce conjuguée (4), de préférence par un encliquetage par adhérence et/ou complémentarité de formes, le dispositif d'appui de soutien (7) étant de préférence encliqueté sur la pièce conjuguée (4) dans la position d'utilisation.

12. Agencement de raccordement selon l'une des revendications 1 ou 10 à 11, **caractérisé en ce que** le dispositif d'appui de soutien (7) est conçu pour fermer de préférence de manière étanche l'ouverture de réception (3), au moins dans la position d'utilisation.
